# NEUE EUROPÄISCHE PATENTSCHRIFT

(11) **EP 3 271 208 B2**
(45) Veröffentlichungstag und Bekanntmachung des Hinweises auf die Entscheidung über den Einspruch: **24.08.2022**
(45) Hinweis auf die Patenterteilung: 28.08.2019
(21) Anmeldenummer: 17707891.2
(22) Anmeldetag: 01.03.2017
(51) Int. Cl.: H01P 5/08, H01Q 13/22, B60L 53/16, B60L 53/30, H01R 13/631

(54) **DATENÜBERTRAGUNGSVORRICHTUNG UND VORRICHTUNG ZUM KONDUKTIVEN ÜBERTRAGEN ELEKTRISCHER ENERGIE**
DATA TRANSMISSION DEVICE AND DEVICE FOR CONDUCTIVE TRANSMISSION OF ELECTRICAL ENERGY
DISPOSITIF DE TRANSMISSION DE DONNÉES ET DISPOSITIF DE TRANSMISSION D'ÉNERGIE ÉLECTRIQUE PAR CONDUCTION

(30) Priorität: 04.03.2016 DE 102016103919
(43) Veröffentlichungstag der Anmeldung: 24.01.2018
(73) Patentinhaber: Conductix-Wampfler GmbH, 79576 Weil am Rhein (DE)
(72) Erfinder: MAIER, Bernd, 79418 Schliengen (DE); KREITER, Frank, 79429 Malsburg (DE)
(74) Vertreter: Charrier Rapp & Liebau
(86) Internationale Anmeldenummer: PCT/EP2017/054741
(87) Internationale Veröffentlichungsnummer: WO 2017/148999

(56) Entgegenhaltungen:
- EP-A1- 2 393 165
- WO-A1-2015/018888
- DE-A1- 3 012 790
- DE-A1-102012 002 183
- DE-A1-102014 107 466
- DE-A1-102014 107 466
- DE-B3-102013 007 646
- DE-U1-202010 015 377
- DE-U1-202013 100 010
- VAHLE: "SMG- Slotted Microwave Guide", VAHLE - Guide, 2002, pages 1-36, Retrieved from the Internet: URL:http://ykeng.com/vahle/download/Cat_9e _E_SMG_Slotted_Microwave_Guide.pdf [retrieved on 2005-12-08]
- H. DALICHAU: "Übergänge und Fahrzeugkoppler für Schlitzhohlleiterstrecken", Frequenz, vol. 36, no. 6, 1982, pages 169-175,

## Beschreibung

Die Erfindung betrifft eine Datenübertragungsvorrichtung nach dem Oberbegriff des Anspruchs 1 und eine Vorrichtung zum konduktiven Übertragen elektrischer Energie zwischen einer Ladestation und einem gegenüber der Ladestation beweglichen Verbraucher nach dem Oberbegriff des Anspruchs 6.

Die WO 2015/018888 A1 offenbart eine Kontaktvorrichtung und eine Ladekontakteinheit für ein Schnellladesystem für elektrisch angetriebene Fahrzeuge wie Elektrobusse. Die Kontaktvorrichtung dient zur Ausbildung einer elektrisch leitenden Verbindung zwischen dem Fahrzeug und der stationären Ladestation mit einer Ladekontakteinheit, wobei die Kontaktvorrichtung an dem Fahrzeug angeordnet ist und eine Kontakteinrichtung zur Kontaktierung der Ladekontakteinheit aufweist. Dabei umfasst die Kontaktvorrichtung oder die Ladekontakteinheit eine Positioniereinrichtung mit einem Pantographen oder eine Schwinge, mittels derer die Kontakteinrichtung in vertikaler Richtung relativ zur Ladekontakteinheit positionierbar ist. Dabei weist die Kontakteinrichtung weiter Kontaktelemente, welche mit Ladekontaktelementen der Ladekontakteinheit zur Ausbildung von Kontaktpaarungen kontaktierbar sind. Die Positioniereinrichtung weist weiter eine an einem entfernten Ende des Pantographen oder der Schwinge angeordnete Querführung auf, mittels welcher der Kontaktelementträger quer relativ zur Ladekontakteinheit positionierbar ist. Weiter sind dort an der Ladekontakteinheit Leiterstreifen für eine Steuerleitung vorgesehen, welche mit Steuerkontaktelementen der Kontakteinrichtung konduktiv verbindbar sind.

Die DE 10 2013 007 646 B3 offenbart eine Anlage mit einem entlang einer Schienenstrecke bewegbaren Schienenfahrzeug, wobei ein Schlitzhohlleiter an der Schienenstrecke vorgesehen ist. Dabei ist an einem Gestell des Schienenfahrzeugs ein U-förmiges Schenkelteil angeordnet, dessen Schenkel eine Seitenwandung des Schlitzhohlleiters umgreifen, wobei dabei einer der Schenkel mit einer daran angebrachten Antenne in den Schlitzhohlleiter eingreift. Dabei ist das Schenkelteil zwar federnd gegenüber dem Schlitzholleiter gelagert, die Antenne kann aber nur seitlich über einen eigens dafür vorgesehenen Einfädelbereich in den Schlitzhohlleiter eingeführt werden.

Die DE 20 2010 015 377 U1 offenbart ein Sicherheitskontaktelement zur Versorgung von positionierbaren Anlagen, Maschinen und Fahrzeugen mit elektrischen Strom, besteht aus einem beweglichen Leitungsstrang welcher händisch oder automatisch, d. h. elektromechanisch, bewegt mit einem als Kontaktbox ausgeführten Teil elektrisch leitend miteinander verbunden werden kann. Dabei weist die Kontaktbox einen Einführtrichter auf, in den eine Stößelspitze eines Kontaktstößels eingefahren werden kann. Der Kontaktstößel weist ebenfalls eine der Trichterform der Kontaktbox entsprechende Abstufung auf, an der Kontaktflächen angebracht sind, die mit entsprechenden Kontaktflächen der Kontaktbox zur Bereitstellung eines zweiten Pols der Stromverbindung zusammenwirken, während ein erster Pol durch einen Kontaktstift an der Kontaktbox und die vordere Spitze des Kontaktstößels gebildet wird. An dem Kontaktstößel wie auch der Kontaktbox sind RFID-Sensoren angeordnet, was ausschließlich dem Zweck dient, dass sich der Kontaktstößel an der Kontaktbox identifizieren kann.

Die DE 10 2012 002 183 A1 offenbart eine Anlage mit einem Schlitzhohlleiter zur Datenübertragung, wobei ein Schienenfahrzeug eine Antenne aufweist, welche in den Schlitzbereich des Schlitzhohlleiters zumindest teilweise hineinragt, wobei der Schlitzhohlleiter parallel zu einem Schienenteil angeordnet und/oder mit diesem verbunden ist, wobei das Schienenfahrzeug entlang des Schienenteils bewegbar ist, wobei der Schlitzhohlleiter einen Kaminabschnitt aufweist, der den Schlitzbereich begrenzt, wobei das Schirmblech den Kaminabschnitt zumindest teilweise abdeckt und/oder das Schirmblech zumindest teilweise über den Kaminabschnitt übergestülpt ist, insbesondere von außen, also von der äußeren Umgebung des Schlitzhohlleiters her übergestülpt ist.

Die DE 10 2014 107 466 A1 offenbart eine gattungsgemäße Datenübertragungsvorrichtung bei einer Schleifleitung zur Versorgung mindestens eines daran in deren Längsrichtung verfahrbaren elektrischen Verbrauchers über einen Stromabnehmer. Dabei weist die Schleifleitung ein als Baueinheit ausgebildetes Erdungsleiterprofil und Schlitzhohlleiter auf, und der Stromabnehmer weist einen als Baueinheit ausgebildeten Erdungsschleifkontakt und Antenne auf, wobei die Antenne in den Schlitzhohlleiter ein- und ausfahrbar ist.

Diese konduktive Verbindung weist den Nachteil auf, dass es relativ schnell zur Oxidation und Verunreinigung der Kontaktflächen kommen kann. Insbesondere in Einsatzgebieten mit hoher Luftfeuchtigkeit, beispielsweise in Umschlagsplätzen von Häfen, oder in verschmutzungsgefährdeten Gebieten verschmutzen und oxidieren die Kontaktflächen sehr schnell. Die Kontaktflächen müssen also regelmäßig aufwendig gereinigt und gewartet werden. Ist dies nicht der Fall, häufen sich relativ schnell die Störungen bei der Datenübertragung, was die Zuverlässigkeit des Systems deutlich reduziert. Da solche Einheiten auch bei autonom fahrenden Fahrzeugen eingesetzt werden, muss dann regelmäßig Reinigungspersonal die Ladestationen und die Kontakteinrichtungen der Fahrzeuge, welche auf zum Teil großen Flächen oder langen Fahrstrecken angeordnet sind, abfahren und die Kontakte reinigen.

Aufgabe der Erfindung ist es deshalb, eine Datenübertragungsvorrichtung und eine Vorrichtung zum konduktiven Übertragen elektrischer Energie zwischen einer Ladestation und einem gegenüber der Ladestation beweglichen Verbraucher bereitzustellen, welche die oben genannten Nachteile überwinden und eine wartungsarme, gegen äußere Umwelteinflüsse robuste und gleichzeitig einfache und sichere, höchstzuverlässige und möglichst störungsarme bzw. störungsfreie Datenübertragung zwischen der Ladestation und dem Verbraucher ermöglichen.

Die Erfindung löst die Aufgabe durch eine Datenübertragungsvorrichtung mit den Merkmalen des Anspruchs 1 und eine Vorrichtung zum konduktiven Übertragen elektrischer Energie zwischen einer Ladestation und einem gegenüber der Ladestation beweglichen Verbraucher mit den Merkmalen des Anspruchs 6.

Die eingangs genannte Datenübertragungsvorrichtung ist erfindungsgemäß dadurch gekennzeichnet, dass aufeinander zulaufende Führungswände eines Einführtrichters in den Längsschlitz des Hohlprofils münden. Hierdurch kann das Einführen der Sende- und/oder Empfangseinheit in den Längsschlitz verbessert werden, wobei eine Rückstellvorrichtung vorgesehen ist, welche bei Auslenkung der Sende- und/oder Empfangseinheit aus einer vorgegebenen Ruhestellung in Zustellrichtung vom Längsschlitz weg eine Rückstellkraft auf die Sende- und/oder Empfangseinheit in Richtung des Längsschlitzes ausübt. Hierdurch kann die Sende- und/oder Empfangseinheit zur Vermeidung von Beschädigungen etwas nach hinten ausweichen. Da das Hohlprofil und/oder die Sende- und/oder Empfangseinheit zum Ein- und Ausfahren der Sende- und/oder Empfangseinheit in den Längsschlitz des Hohlprofils in mindestens einer Zustellrichtung mittels einer Zustellvorrichtung zueinander bewegbar sind, kann sichergestellt werden, dass die Sende- und/oder Empfangseinheit für einen Ladevorgang schnell in den Längsschlitz eingefahren werden kann. Vorteilhaft kann die Sende- und/oder Empfangseinheit dabei auch durch den Längsschlitz hindurch in den Hohlraum des Hohlprofils hinein ragen. Dabei kann die Zustellrichtung bevorzugt durch den Längsschlitz in Richtung eines Hohlraums des Hohlprofils verlaufen, die Sende- und/oder Empfangseinheit kann also zuerst in den Längsschlitz hinein und dann weiter in Richtung des Hohlraums bewegt werden. Bevorzugt kann die Zustellrichtung in einer durch den Längsschlitz verlaufenden Ebene und vom Längsschlitz zum Hohlraum hin verlaufen, und insbesondere senkrecht auf dem Längsschlitz stehen. Dabei kann die Sende- und/oder Empfangseinheit vorteilhaft zumindest teilweise bis in den Hohlraum hineinbewegt werden.

Dabei ist in einer bevorzugten Ausführung das längliche Hohlprofil ein Schlitzhohlleiter und die Sende- und/oder Empfangseinheit eine Antenne für die Datenübertragung zu und vom Schlitzhohlleiter ist. Alternativ kann an dem Hohlprofil und insbesondere in dessen Hohlraum auch eine weitere Sende- und/oder Empfangseinheit, angeordnet sein, welche zur Datenübertragung mit der in den Längsschlitz und/oder Hohlraum eingefahrenen Sende- und/oder Empfangseinheit koppelbar ist. Die Datenübertragung kann vorteilhaft auf optischem Wege erfolgen.

Bevorzugt kann die Zustellvorrichtung einen Antrieb, insbesondere Linearantrieb zum Bewegen der Sende- und/oder Empfangseinheit und/oder des Hohlprofils in die Zustellrichtung aufweisen.

Dabei kann die Sende- und/oder Empfangseinheit mittels einer Lagerung in Zustellrichtung beweglich an einem Träger, insbesondere Kontaktträger eines Ladekopfs gelagert sein, wobei zwischen der Sende- und/oder Empfangseinheit und dem Träger mindestens ein Rückstellelement, insbesondere eine Rückstellfeder der Rückstellvorrichtung angeordnet ist. Dabei kann vorteilhaft die Lagerung am Träger angeordnete Gleitlager und darin laufende, an der Sende- und/oder Empfangseinheit angeordnete Führungselemente aufweisen.

Erfindungsgemäß sind die Sende- und/oder Empfangseinheit und das Hohlprofil in einer quer zur Zustellrichtung verlaufenden Querrichtung zueinander beweglich angeordnet, um einen seitlichen Versatz zwischen Sende- und/oder Empfangseinheit und Hohlprofil in Querrichtung ausgleichen zu können. Hierzu ist vorteilhaft eine Rückstelleinrichtung vorgesehen, welche bei Auslenkung der Sende- und/oder Empfangseinheit und/oder des Hohlprofils in der Querrichtung aus einer vorgegebenen Zentralstellung eine Rückstellkraft in Richtung der Zentralstellung auf die Sende- und/oder Empfangseinheit und/oder das Hohlprofil ausübt.

In einer vorteilhaften Ausführung kann die Sende- und/oder Empfangseinheit zumindest in ihrem zum Eingreifen in den Längsschlitz vorgesehenen Bereich von einer Schutzhülle umgeben sein. Hierdurch können Beschädigung der Sende- und/oder Empfangseinheit verringert oder ganz vermieden werden. Um einer Verschlechterung der Datenübertragung vorzubeugen, kann die Schutzhülle elektrisch isolierend sein. In einer vorteilhaften Ausgestaltung kann der Längsschlitz länger, bevorzugt mindestens zweimal so lang sein, wie es die in Längserstreckung des Längsschlitzes verlaufende Breite der Sende- und/oder Empfangseinheit ist. Hierdurch kann vorteilhaft ein gewisser Versatz von Sende- und/oder Empfangseinheit gegenüber dem Längsschlitz ausgeglichen werden.

Die eingangs genannte Vorrichtung zum konduktiven Übertragen elektrischer Energie zwischen einer Ladestation und einem gegenüber der Ladestation beweglichen Verbraucher ist erfindungsgemäß dadurch gekennzeichnet, dass eine oben und nachfolgend beschriebene Datenübertragungsvorrichtung verwendet wird.

Bevorzugt kann der Ladekopf an der Ladestation und das Hohlprofil an dem Verbraucher oder umgekehrt angeordnet sein, je nachdem, was für Erfordernisse eine Anwendung hat. Im Bereich der automatisierten, fahrerlosen Fahrzeuge, sogenannten AGVs, welche selbständig fahren und nur zum Wiederaufladen ihrer Ackus an die Ladestation fährt, kann vorteilhaft das Hohlprofil am AGV angeordnet sein, bevorzugt in eine von außen für den Ladekopf zugänglichen Ladekammer. Ggf. kann die Ladekammer vorteilhaft gegen äußere Einflüsse, insbesondere Witterungseinflüsse und mechanische Einflüsse, mit einer Schutzabdeckung verschließbar sein. Bevorzugt kann der Längsschlitz des Hohlprofils im wesentlichen in vertikaler oder horizontaler Richtung verlaufen.

In einer vorteilhaften Ausgestaltung kann die Sende- und/oder Empfangseinheit an einem Kontaktträger des Ladekopfs angeordnet sein, Bevorzugt kann die Sende- und/oder Empfangseinheit dabei an einer in Zustellrichtung zum Hohlprofil weisenden Einführspitze des Kontaktträgers angeordnet sein. Um die Beschädigungsgefahr beim Einfahren der Sende- und/oder Empfangseinheit zu verringern, kann die Sende- und/oder Empfangseinheit zumindest teilweise in die Einführspitze versenkbar sein. Bevorzugt kann der Kontaktträger einen keilförmigen Querschnitt aufweisen, um ggf. in einen entsprechend ausgebildeten Einführtrichter einfahren zu können.

Die Erfindung wird nachfolgend anhand von detaillierten Ausführungsbeispielen mit Bezug auf die begleitenden Zeichnungen beschrieben. Diese zeigen:
- **Fig. 1**: eine obere Draufsicht auf eine erfindungsgemäße Vorrichtung mit einer integrierten erfindungsgemäßen Datenübertragungsvorrichtung in einer ersten, getrennten Stellung;
- **Fig. 2**: die obere Draufsicht auf die Vorrichtung aus Fig. 1 mit der Datenübertragungsvorrichtung in einer zweiten, verbundenen Stellung;
- **Fig. 3**: eine schematische dreidimensionale Ansicht einer Einführvorrichtung der Vorrichtung aus Fig. 1 und 2;
- **Fig. 4**: eine schematische dreidimensionale Ansicht eines Ladekopfs der Vorrichtung aus Fig. 1 und 2 von schräg oben;
- **Fig. 5**: eine schematische dreidimensionale Ansicht des Ladekopfs aus Fig. 4 von schräg unten;
- **Fig. 6**: eine schematische dreidimensionale Detailansicht eines Teils der Datenübertragungsvorrichtung;
- **Fig. 7**: eine schematische dreidimensionale Ansicht der erfindungsgemäßen Vorrichtung in Anwendung bei einem automatisierten, fahrerlosen Fahrzeuge mit der Datenübertragungsvorrichtung in der ersten, getrennten Stellung gemäß Fig. 1;
- **Fig. 8**: die schematische dreidimensionale Ansicht aus Fig. 7 mit der Datenübertragungsvorrichtung in der zweiten, verbundenen Stellung gemäß Fig. 2.

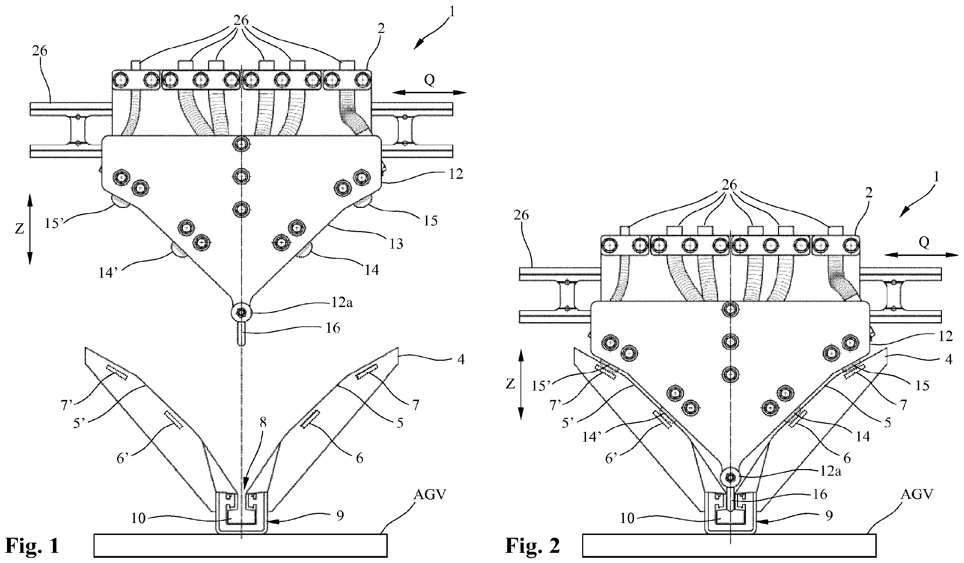

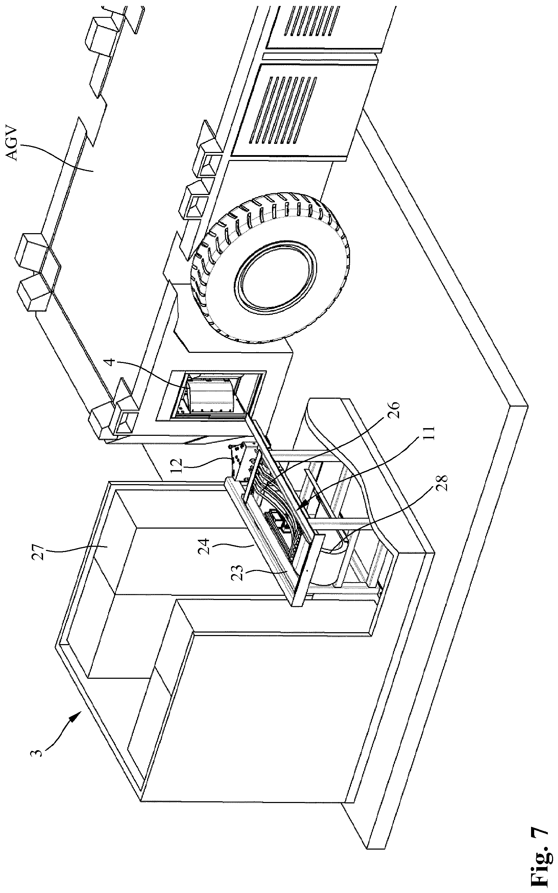

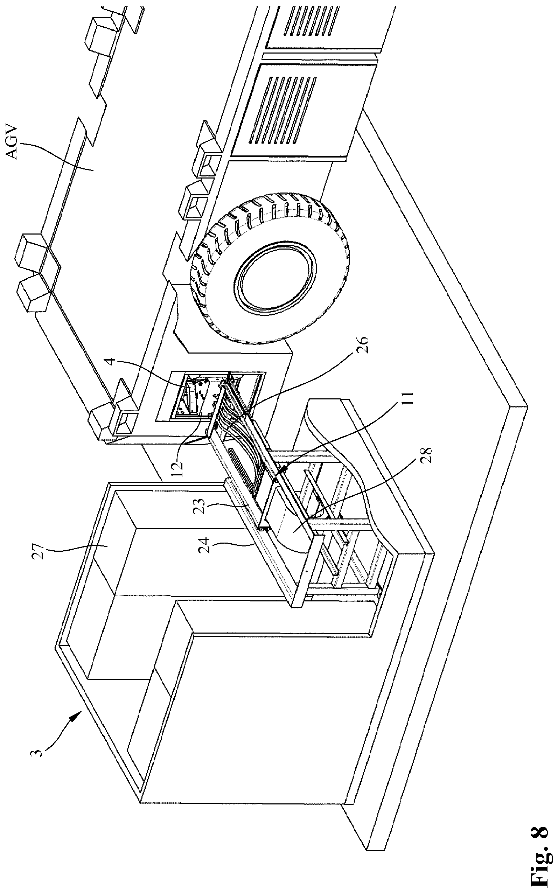

Fig. 1 zeigt eine erfindungsgemäße Vorrichtung 1 zum konduktiven Übertragen elektrischer Energie zwischen einem Ladekopf 2 eines in Fig. 7 und 8 gezeichneten beweglichen elektrischen Verbrauchers in Form eines automatisierten, fahrerlosen Fahrzeuges AGV und einer angedeuteten ortsfesten Ladestation 3. Anstelle eines AGV kann die Vorrichtung 1 auch bei anderen Fahrzeugen verwendet werden.

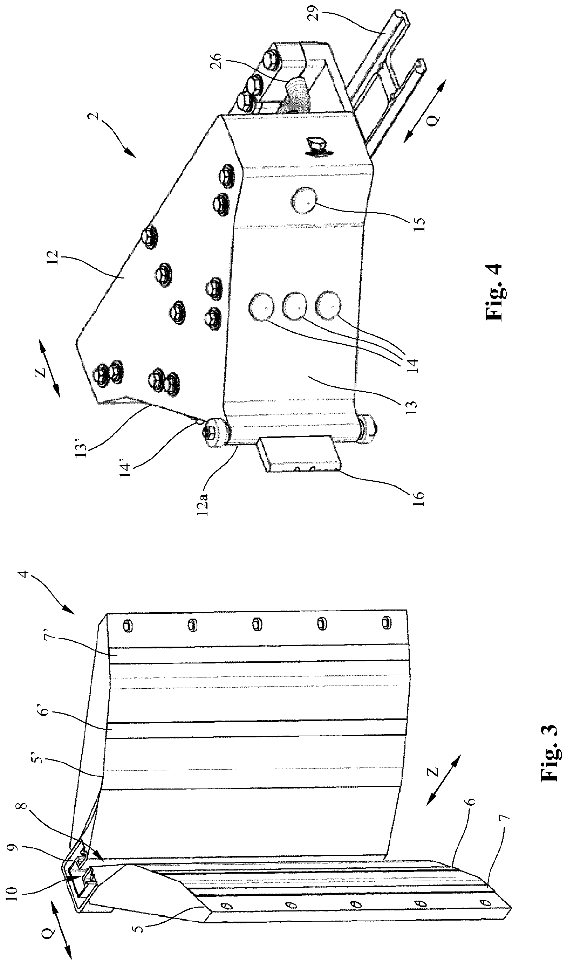

Das Fahrzeug AGV weist hierzu, wie in Fig. 3, 7 und 8 gut erkennbar, einen Einführtrichter 4 auf, welcher zwei im Wesentlichen senkrecht stehende Führungswandungen 5, 5' aufweist. Die Führungswandungen 5, 5' sind identisch, aber spiegelbildlich aufgebaut.

Die Führungswandungen 5, 5' weisen zur konduktiven Energieübertragung zum Ladekopf 2 in vertikaler Richtung verlaufende und elektrisch gut leitende erste Kontaktelemente in Form jeweils eines Ladekontaktstreifens 6, 6' sowie jeweils ebenfalls in vertikaler Richtung verlaufende Erdungskontaktfläche in Form jeweils eines Erdungskontaktstreifens 7, 7' auf.

Die beiden Führungswandungen 5, 5' laufen trichterförmig aufeinander zu und münden an ihren in Fig. 3 hinteren Enden in einen Längsschlitz 8 eines Schlitzhohlleiters 9. Der Schlitzhohlleiter 9 weist dabei die insbesondere in Fig. 1 und 2 gut erkennbare Querschnittsform auf, welche grundsätzlich bekannt ist. Dabei verläuft der Längsschlitz 8 ebenfalls in vertikaler Richtung über die gesamte Höhe des Einführtrichters 4. Der Längsschlitz 8 weitet sich dann in bekannter Weise in einen Hohlraum 10 des T-förmigen Schlitzhohlleiters 9 auf. Der Schlitzhohlleiter 9 kann auch andere Querschnitte aufweisen, um eine möglichst gute Datenübertragung bei gleichzeitig geringfügiger Abstrahlung nach außen bereitzustellen.

Der Ladekopf 2 ist in eine Zustellrichtung Z aktiv bewegbar an der Ladestation 3 angebracht und kann über eine in Fig. 7 und 8 gezeigte lineare Zustellvorrichtung 11 in Zustellrichtung Z zwischen einer eingefahrenen, getrennten Stellung (Fig. 7) und einer ausgefahrenen, verbundenen Stellung (Fig. 8) hin und herbewegt werden. Die Zustellvorrichtung 11 und ihre Funktionsweise wird später im Detail erläutert. Die Zustellrichtung Z verläuft dabei durch den Längsschlitz 8 in Richtung des Hohlraums 10 des Schlitzhohlleiters 9, bevorzugt also in einer durch den Längsschlitz 8 verlaufenden Ebene vom Längsschlitz 8 auf den Hohlraum 10 zu.

Dabei weist ein Kontaktträger 12 mit vertikalen Seitenwandungen 13, 13' entsprechend dem Querschnitt des Einführtrichters 4 ausgebildeten keilförmigen Querschnitt auf, wobei die Form der Seitenwandungen 13, 13' an die der Führungswandungen 5, 5' angepasst ist. An den Seitenwandungen 13, 13' sind mehrere Kontaktelemente 14, 14' für die elektrische Leistungsübertragung und Erdungskontakte 15, 15' zur Verbindung der Erdung des Fahrzeugs AGV mit der Ladestation 2 vorgesehen.

Die Anzahl, räumliche Anordnung und Breite der Ladekontaktstreifen 6, 6', der Erdungskontaktstreifen 7, 7' der Kontaktelemente 14, 14' wie auch der Erdungskontakte 15, 15' können abhängig von der Anwendung und dem vorhandenen Raum auch anders gewählt werden.

Dabei sind die jeweils identisch ausgebildeten drei Kontaktelemente 14, 14' in vertikaler Richtung übereinander so an der Seitenwandungen 13 bzw. 13' angebracht, dass sie in dem in Fig. 2 gezeigten verbundenen Zustand von Ladekopf 2 und Einführtrichter 4 die Ladekontaktstreifen 6, 6' bzw. die Erdungskontaktstreifen 7, 7' elektrisch leitend kontaktieren. Dabei kann ein vertikaler Versatz zwischen Kontaktträger 12 des Ladekopfs 2 und Einführtrichter 4 des Fahrzeugs AGV leicht dadurch ausgeglichen werden, dass der Einführtrichter 4 eine größere Höhe aufweist als der Kontaktträger 12, wobei es für die Datenübertragung grundsätzlich ausreicht, dass der Längsschlitz 8 länger ist als die Antenne 16 in Längserstreckung des Längsschlitzes breit, vorliegend also in vertikale Richtung gemessen. Ein derartiger vertikaler Versatz kann u. a. durch unterschiedliche Beladungen oder Reifendruck des Fahrzeugs etc. verursacht sein.

An einer in Fig. 4 vorderen, keilförmig zulaufenden Einführspitze des Kontaktträgers 12 ragt eine Antenne 16 heraus. Dabei ist die Antenne 16 von einer Schutzhülle umgeben, welche in den Zeichnungen nicht extra bezeichnet ist. Diese Schutzhülle kann vorteilhaft elektrisch isolierend sein, um zu verhindern, dass die Antenne 16 mit den Wandungen des Schlitzhohlleiters 9 in elektrisch leitende Berührung kommt, um einen für die berührungslose Datenübertragung nachteiligen Kurzschluss zwischen Schlitzhohlleiter 9 und Antenne 16 zu vermeiden. Bevorzug ist dabei die Breite des Längsschlitzes 8 so bemessen, dass die Antenne 16 bei exakt zentraler Positionierung selbst mit der sie umgebenden Schutzhülle nicht die seitlichen Wandungen des Längsschlitzes 8 berührt. Bei exakter Positionierung berührt die Antenne 16 aber die Wandungen des Längsschlitzes 8 nicht.

Zur Herstellung einer Signalübertragung mit dem Schlitzhohlleiter 9 kann die Antenne 16 in den Längsschlitz 8 eingeführt werden. Dabei wird die Antenne 16 mittels der in Fig. 7 und 8 gezeigten Zustellvorrichtung 11 des Ladekopfs 2 von der in Fig. 1 gezeigten getrennten Stellung in Zustellrichtung Z in die in Fig. 2 gezeigte verbundene Stellung bewegt. Hierzu weist die Zustellvorrichtung 11 einen in Zustellrichtung Z an einer ortsfesten Führung 23 verfahrbaren Schlitten 24 auf, an dessen in Fig. 7 und 8 rechten Ende der Ladekopf 2 angeordnet ist.

Sowohl ein auf der Rückseite der Antenne 16 vorgesehener Antennenanschluss wie auch die Kontaktelemente 14, 14' und die Erdungskontakte 15, 15' sind über in Fig. 1, 2, 7 und 8 gut erkennbare Kabel 26 mit einer ortsfesten Energieversorgungs- und Signalübertragungseinheit 27 in an sich bekannter Weise verbunden. Um die Nachführung der Kabel 26 mit dem Schlitten 24 zu ermöglichen, sind die Kabel 26 bereichsweise in einer an sich bekannten beweglichen Kabelführung 28 geführt.

Grundsätzlich wird durch die aufeinander angepasste keilförmige bzw. trichterförmige Ausbildung des Kontaktträgers 12 und des Einführtrichters 4 eine möglichst exakte Positionierung der Antenne 16 im Längsschlitz 8 bzw. der Ladekontaktstreifen 6, 6' und der Erdungskontaktstreifen 7, 7' an den Kontaktelementen 14, 14' bzw. den Erdungskontakten 15, 15' erreicht.

Bevorzugt erfolgt die Positionierung dabei mit bereits genau auf den Längsschlitz 8 ausgerichteter Antenne 16, so dass keine Bewegung in eine Querrichtung Q quer zur Zustellrichtung Z notwendig ist.

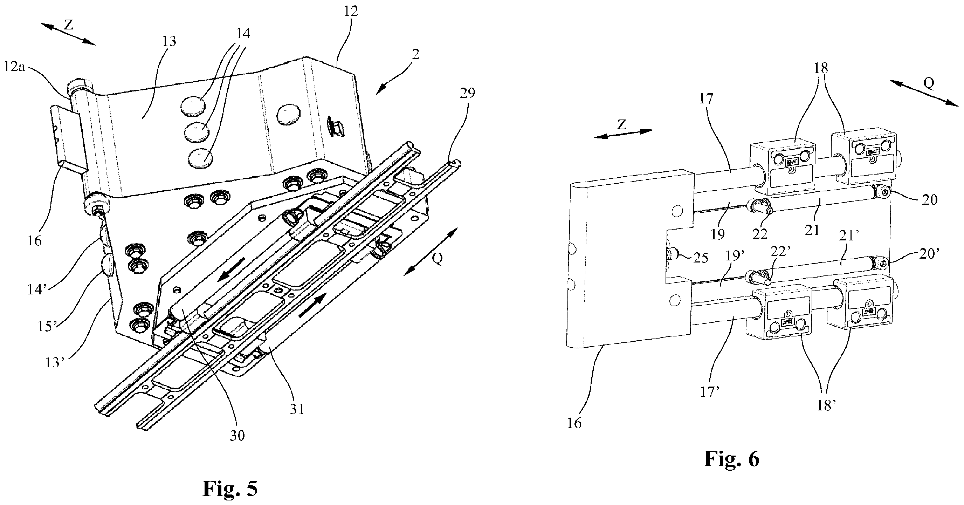

Da dies in der Praxis aber aufgrund nicht exakter Positionierung nicht immer sichergestellt werden kann, ist der Ladekopf 2 über eine in Querrichtung Q verlaufende Linearführung 29 in Querrichtung Q beweglich am vorderen Ende des Schlittens 24 der Zustellvorrichtung 11 angeordnet, um beim Einführen des Kontaktträgers 12 in den Einführtrichter 4 zusätzlich einen in Querrichtung Q verlaufenden Versatz zwischen Einführtrichter 4 und Kontaktträger 12 horizontal auszugleichen. Dabei stellen in Fig. 5 gut erkennbare Zentrierfedern 30, 31 einerseits sicher, dass der Ladekopf 2 bei einer Auslenkung aus der in Fig. 1 gezeigten, bezüglich der Querrichtung Q zentralen Ruhestellung wieder in diese zurückgedrückt wird. Andererseits erlauben die Zentrierfedern 30, 31, den Kontaktträger 12 von einer außermittigen Stellung in die mittige Stellung gemäß Fig. 2 zu verschieben. Dabei sind die Zentrierfedern 30, 31 gegensinnig angeordnet, so dass die eine den Ladekopf 2 in die eine parallel zur Querrichtung Q verlaufende Richtung zieht, während die andere in die Gegenrichtung zieht. Dies ist in Fig. 5 durch die in den Federn eingezeichneten Pfeile schematisch angedeutet.

Um zu verhindern, dass bei außermittiger Positionierung des Kontaktträgers 12 bei der Zustellung des Ladekopfs 2 in Zustellrichtung Z auf den Einführtrichter 4 hin die Antenne 16 beim dabei möglichen Kontaktieren einer der Führungswandungen 5, 5' beschädigt wird, ist die Antenne 16 in Zustellrichtung Z in den Kontaktträger 12 hinein beweglich angeordnet.

Wie in Fig. 6 im Detail gezeigt, sind hierzu an der dem Schlitzhohlleiter 9 abgewandten Rückseite der Antenne 16 zwei zylindrische Führungsstäbe 17, 17' in Gleitlagern 18, 18' in Zustellrichtung Z beweglich geführt. Die Gleitlager 18, 18' sind dabei fest mit dem Ladekopf 2 verbunden. Weiter sind an der Antenne 16 zwei parallel zu den Führungsstäben 17, 17' verlaufende längliche Befestigungsstreben 19, 19' angeordnet. An dem in Fig. 6 rechten, hinteren Ende weisen die Befestigungsstreben 19, 19' zwei Befestigungspunkte 20, 20' für Rückstellfedern 21, 21' auf. Die Rückstellfedern 21, 21' sind andernends über Befestigungsschrauben 22, 22' fest am Ladekopf 2 befestigt und halten die Antenne 16 in einer in Fig. 1 gezeigten vorgegebenen Ruhestellung, d. h. in Fig. 6 sind die Rückstellfedern 21, 21' entspannt. Stößt die Antenne 16 beim Einführen des Kontaktträgers 12 in den Einführtrichter 4 an den Führungswandungen 5, 5' oder an anderen Stellen an, weicht die Antenne 16 in Zustellrichtung Z gegen die Federkraft der Rückstellfedern 21, 21' nach hinten aus. Hierdurch kann eine Beschädigung der Antenne 16 vermieden und zugleich eine saubere und zuverlässige Einführung der Antenne 16 in den Längsschlitz 8 sichergestellt werden.

In obigen Ausführungen bilden der Einführtrichter 3 mit Schlitzhohlleiter 9, der Kontaktträger 12 mit der Antenne 16, die Zustellvorrichtung 11 in Zustellrichtung Z und die Linearführung 29 einschließlich der Zentrierfedern 30, 31 eine erfindungsgemäße Datenübertragungsvorrichtung aus. Es sind aber auch andere konkrete Ausgestaltungen der in den Ansprüchen angegebenen Erfindung möglich. Insbesondere kann der Längsschlitz 8 grundsätzlich in jede Richtung ausgerichtet sein, beispielsweise anstelle in vertikaler Richtung, wie in den Zeichnungen gezeigt, auch in horizontaler, wobei dann die Anordnung um 90° gedreht werden müsste.

### Bezugszeichen

- 1: Vorrichtung
- 2: Ladekopf
- 3: Ladestation
- 4: Einführtrichter
- 5, 5': Führungswandungen
- 6, 6': Ladekontaktstreifen
- 7, 7': Erdungskontaktstreifen
- 8: Längschlitz
- 9: Schlitzhohlleiter (Hohlprofil)
- 10: Hohlraum Schlitzhohlleiter
- 11: Zustellvorrichtung
- 12: Kontaktträger
- 12a: Einführspitze
- 13: Seitenwandungen
- 14, 14': Kontaktelemente Leistungsübertragung
- 15, 15': Erdungskontakte
- 16: Antenne (Sende- und/oder Empfangseinheit)
- 17, 17': Führungsstäbe
- 18, 18': Gleitlager für Führungsstäbe
- 19, 19': Befestigungsstreben
- 20, 20': antennenseitige Befestigungsschrauben für Rückstellfedern
- 21, 21': Rückstellfedern
- 22, 22': ladekopfseitige Befestigungsschrauben für Rückstellfedern
- 23: Schlitten
- 24: Schlittenführung
- 26: Kabel
- 27: Energieversorgungs- und Signalübertragungseinheit
- 28: Kabelführung
- 29: Linearführung in Querrichtung Q
- 30: erste Zentrierfeder
- 31: zweite Zentrierfeder
- AGV: automatisiertes, fahrerloses Fahrzeug (Automated Guided Vehicle)
- Z: Zustellrichtung Ladekopf
- Q: Querrichtung senkrecht zur Zustellrichtung Ladekopf

## Patentansprüche

1. Datenübertragungsvorrichtung mit einem länglichen Hohlprofil (9) mit einem in eine Längsrichtung des Hohlprofils (9) verlaufenden Hohlraum (10) und einem in Längsrichtung verlaufenden Längsschlitz (8) und einer Sende- und/oder Empfangseinheit (16), wobei das längliche Hohlprofil ein Schlitzhohleiter (9) und die Sende- und/oder Empfangseinheit eine Antenne (16) für die Datenübertragung zu und vom Schlitzhohlleiter (9) ist, und wobei das Hohlprofil (9) und/oder die Sende- und/oder Empfangseinheit (16) zum Ein- und Ausfahren der Sende- und/oder Empfangseinheit (16) in den Längsschlitz (8) des Hohlprofils (9) in mindestens einer Zustellrichtung (Z) mittels einer Zustellvorrichtung (11) zueinander bewegbar sind, wobei aufeinander zulaufende Führungswände (5, 5') eines Einführtrichters (4) in den Längsschlitz (8) des Hohlprofils (9) münden, wobei eine Rückstellvorrichtung (21, 21') vorgesehen ist, welche bei Auslenkung der Sende- und/oder Empfangseinheit (16) aus einer vorgegebenen Ruhestellung in Zustellrichtung (Z) vom Längsschlitz (8) weg eine Rückstellkraft auf die Sende- und/oder Empfangseinheit (16) in Richtung des Längsschlitzes (8) ausübt, **dadurch gekennzeichnet, dass** die Sende- und/oder Empfangseinheit (16) und das Hohlprofil (9) in einer quer zur Zustellrichtung (Z) verlaufenden Querrichtung (Q) zueinander beweglich angeordnet sind, wobei eine Rückstelleinrichtung (30, 31) vorgesehen ist, welche bei Auslenkung der Sende- und/oder Empfangseinheit (16) und/oder des Hohlprofils (9) in der Querrichtung (Q) aus einer vorgegebenen Zentralstellung eine Rückstellkraft in Richtung der Zentralstellung auf die Sende- und/oder Empfangseinheit (16) und/oder das Hohlprofil (9) ausübt.

2. Datenübertragungsvorrichtung nach Anspruch 1, **dadurch gekennzeichnet, dass** die Zustellvorrichtung (11) einen Antrieb, insbesondere Linearantrieb (23, 24) zum Bewegen der Sende- und/oder Empfangseinheit (16) und/oder des Hohlprofils (9) in die Zustellrichtung (Z) aufweist.

3. Datenübertragungsvorrichtung nach Anspruch 1 oder 2, **dadurch gekennzeichnet, dass** die Sende- und/oder Empfangseinheit (16) mittels einer Lagerung (18, 18') in Zustellrichtung (Z) beweglich an einem Träger (12) gelagert ist, wobei zwischen der Sende- und/oder Empfangseinheit (16) und dem Träger (12) mindestens ein Rückstellelement, insbesondere eine Rückstellfeder (21, 21') der Rückstellvorrichtung angeordnet ist.

4. Datenübertragungsvorrichtung nach Anspruch 3, **dadurch gekennzeichnet, dass** die Lagerung am Träger (12) angeordnete Gleitlager (18, 18') und darin laufende, an der Sende- und/oder Empfangseinheit (16) angeordnete Führungselemente (17, 17') aufweist.

5. Datenübertragungsvorrichtung nach einem der voranstehenden Ansprüche, **dadurch gekennzeichnet, dass** die Sende- und/oder Empfangseinheit (16) zumindest in ihrem zum Eingreifen in den Längsschlitz (8) vorgesehenen Bereich von einer Schutzhülle, insbesondere einer elektrisch isolierenden Schutzhülle, umgeben ist.

6. Vorrichtung (1) zum konduktiven Übertragen elektrischer Energie zwischen einer Ladestation (3) und einem gegenüber der Ladestation (3) beweglichen Verbraucher (AGV), wobei die Vorrichtung (1) einen Ladekopf (2) mit Kontaktelementen (14, 14') zur Herstellung einer elektrischen Verbindung zwischen Verbraucher (AGV) und Ladestation (3) aufweist, **dadurch gekennzeichnet, dass** die Vorrichtung (1) eine Datenübertragungsvorrichtung nach einem der voranstehenden Ansprüche umfasst.

7. Vorrichtung (1) nach Anspruch 6, **dadurch gekennzeichnet, dass** der Ladekopf (2) an der Ladestation (3) und das Hohlprofil (9) an dem Verbraucher (AGV) oder umgekehrt angeordnet sind.

8. Vorrichtung (1) nach Anspruch 6 oder 7, **dadurch gekennzeichnet, dass** der Längsschlitz (8) des Hohlprofils (9) im wesentlichen in vertikaler oder horizontaler Richtung verläuft.

9. Vorrichtung (1) nach Anspruch 6, 7 oder 8, **dadurch gekennzeichnet, dass** die Sende- und/oder Empfangseinheit (16) an einem Kontaktträger (12) des Ladekopfs (2) angeordnet sind.

10. Vorrichtung (1) nach Anspruch 9, **dadurch gekennzeichnet, dass** die Sende- und/oder Empfangseinheit (16) an einer in Zustellrichtung (Z) weisenden Einführspitze (12a) des Kontaktträgers (12) angeordnet ist.

11. Vorrichtung (1) nach Anspruch 10, **dadurch gekennzeichnet, dass** die Sende- und/oder Empfangseinheit (16) zumindest teilweise in die Einführspitze (12a) versenkbar ist.

## Claims

1. Data-transmission device having an elongated hollow profile (9) with a cavity (10) running in a longitudinal direction of the hollow profile (9) and a longitudinal slot (8) running in longitudinal direction and a transmitting and/or receiving unit (16), wherein the elongated hollow profile is a slotted waveguide (9) and the transmitting and/or receiving unit is an antenna (16) for data transmission to and from the slotted waveguide (9), and wherein the hollow profile (9) and/or the transmitting and/or receiving unit (16) are movable towards one another for moving in and moving out of the transmitting and/or receiving unit (16) into the longitudinal slot (8) of the hollow profile (9) in at least one delivery direction (Z) by means of a delivery device (11), wherein guide walls (5, 5') of an introduction funnel (4) moving towards one another lead into the longitudinal slot (8) of the hollow profile (9), wherein a resetting device (21, 21') is provided which exerts a resetting force on the transmitting and/or receiving unit (16) in the direction of the longitudinal slot (8) on displacement of the transmitting and/or receiving unit (16) from a preset rest position in delivery direction (Z) away from the longitudinal slot (8), **characterised in that** the transmitting and/or receiving unit (16) and the hollow profile (9) are arranged to be movable with respect to one another in a transverse direction (Q) running transversely to the delivery direction (Z), wherein a resetting device (30, 31) is provided which exerts a resetting force in the direction of the central position of the transmitting and/or receiving unit (16) and/or the hollow profile (9) on displacement of the transmitting and/or receiving unit (16) and/or of the hollow profile (9) in the transverse direction (Q) from a preset central position.

2. Data-transmission device according to claim 1, **characterised in that** the delivery device (11) has a drive, in particular linear drive (23, 24), for moving the transmitting and/or receiving unit (16) and/or the hollow profile (9) into the delivery direction (Z).

3. Data-transmission device according to claim 1 or 2, **characterised in that** the transmitting and/or receiving unit (16) is mounted to be movable on a support (12) by means of a mounting (18, 18') in delivery direction (Z), wherein at least one resetting element, in particular a resetting spring (21, 21') of the resetting device is arranged between the transmitting and/or receiving unit (16) and the support (12).

4. Data-transmission device according to claim 3, **characterised in that** the mounting has sliding bearings (18, 18') arranged on the support (12) and guide elements (17, 17') running therein and arranged on the transmitting and/or receiving unit (16).

5. Data-transmission device according to one of the preceding claims, **characterised in that** the transmitting and/or receiving unit (16) is surrounded at least in its region provided for engagement in the longitudinal slot (8) by a protective cover, in particular an electrically insulating protective cover.

6. Device (1) for conductive transmission of electrical energy between a charging station (3) and a consuming device (AGV) which is movable with respect to the charging station (3), wherein the device (1) has a charging head (2) with contact elements (14, 14') for producing an electrical connection between consuming device (AGV) and charging station (3), **characterised in that** the device (1) comprises a data-transmission device according to one of the preceding claims.

7. Device (1) according to claim 6, **characterised in that** the charging head (2) is arranged on the charging station (3) and the hollow profile (9) is arranged on the consuming device (AGV) or vice versa.

8. Device (1) according to claim 6 or 7, **characterised in that** the longitudinal slot (8) of the hollow profile (9) runs substantially in vertical or horizontal direction.

9. Device (1) according to claim 6, 7 or 8, **characterised in that** the transmitting and/or receiving unit (16) are arranged on a contact support (12) of the charging head (2).

10. Device (1) according to claim 9, **characterised in that** the transmitting and/or receiving unit (16) is arranged on an introduction tip (12a) of the contact support (12) pointing in delivery direction (Z).

11. Device (1) according to claim 10, **characterised in that** the transmitting and/or receiving unit (16) can be lowered at least partly into the introduction tip (12a).

## Revendications

1. Dispositif de transmission de données avec un profilé creux allongé (9) avec une cavité (10) s'étendant dans une direction longitudinale du profilé creux (9) et une fente longitudinale (8) s'étendant dans la direction longitudinale et une unité d'émission et/ou de réception (16), dans lequel le profilé creux allongé est un conducteur creux à fente (9) et l'unité d'émission et/ou de réception est une antenne (16) pour la transmission de données vers et depuis le conducteur creux à fente (9), et dans lequel le profilé creux (9) et/ou l'unité d'émission et/ou de réception (16) peuvent être déplacés l'un par rapport à l'autre au moyen d'un dispositif d'avance (11) dans au moins une direction d'avance (Z) pour rentrer et sortir l'unité d'émission et/ou de réception (16) dans la fente longitudinale (8) du profilé creux (9), dans lequel des parois de guidage (5, 5') convergeant l'une vers l'autre d'un cône d'insertion (4) débouchent dans la fente longitudinale (8) du profilé creux (9), dans lequel est prévu un dispositif de rappel (21, 21') qui, lors de la déviation de l'unité d'émission et/ou de réception (16) d'une position de repos prédéfinie dans la direction d'avance (Z) en s'éloignant de la fente longitudinale (8), exerce une force de rappel sur l'unité d'émission et/ou de réception (16) dans la direction de la fente longitudinale (8), **caractérisé en ce que** l'unité d'émission et/ou de réception (16) et le profilé creux (9) sont disposés de manière mobile l'un par rapport à l'autre dans une direction transversale (Q) s'étendant de manière transversale à la direction d'avance (Z), dans lequel qu'est prévu un mécanisme de rappel (30, 31) qui, lors de la déviation de l'unité d'émission et/ou de réception (16) et/ou du profilé creux (9) dans la direction transversale (Q) depuis une position centrale prédéfinie, exerce sur l'unité d'émission et/ou de réception (16) et/ou le profilé creux (9) une force de rappel en direction de la position centrale.

2. Dispositif de transmission de données selon la revendication 1, **caractérisé en ce que** le dispositif d'avance (11) comprend un entraînement, en particulier un entraînement linéaire (23, 24) pour déplacer l'unité d'émission et/ou de réception (16) et/ou le profilé creux (9) dans la direction d'avance (Z).

3. Dispositif de transmission de données selon la revendication 1 ou 2, **caractérisé en ce que** l'unité d'émission et/ou de réception (16) est montée de manière mobile au niveau d'un support (12) au moyen d'un logement de paliers (18, 18') dans la direction d'avance (Z), dans lequel au moins un élément de rappel, en particulier un ressort de rappel (21, 21') du dispositif de rappel, est disposé entre l'unité d'émission et/ou de réception (16) et le support (12).

4. Dispositif de transmission de données selon la revendication 3, **caractérisé en ce que** le logement de paliers comprend des paliers lisses (18, 18') disposés au niveau du support (12) et des éléments de guidage (17, 17') à l'intérieur disposés au niveau de l'unité d'émission et/ou de réception (16).

5. Dispositif de transmission de données selon l'une quelconque des revendications précédentes, **caractérisé en ce que** l'unité d'émission et/ou de réception (16) est entourée, au moins dans sa zone prévue pour l'entrée en prise dans la fente longitudinale (8), d'une gaine de protection, en particulier une gaine de protection électriquement isolante.

6. Dispositif (1) pour la transmission conductrice d'énergie électrique entre une station de charge (3) et un consommateur (AGV) mobile par rapport à la station de charge (3), dans lequel le dispositif (1) comprend une tête de charge (2) avec des éléments de contact (14, 14') pour l'établissement d'une connexion électrique entre le consommateur (AGV) et la station de charge (3), **caractérisé en ce que** le dispositif (1) comprend un dispositif de transmission de données selon l'une quelconque des revendications précédentes.

7. Dispositif (1) selon la revendication 6, **caractérisé en ce que** la tête de charge (2) est disposée au niveau de la station de charge (3) et le profilé creux (9) est disposé au niveau du consommateur (AGV) ou inversement.

8. Dispositif (1) selon la revendication 6 ou 7, **caractérisé en ce que** la fente longitudinale (8) du profilé creux (9) s'étend sensiblement dans une direction verticale ou horizontale.

9. Dispositif (1) selon la revendication 6, 7 ou 8, **caractérisé en ce que** l'unité d'émission et/ou de réception (16) est disposée au niveau d'un support de contact (12) de la tête de charge (2).

10. Dispositif (1) selon la revendication 9, **caractérisé en ce que** l'unité d'émission et/ou de réception (16) est disposée au niveau d'une pointe d'insertion (12a) du support de contact (12) orientée dans la direction d'avance (Z).

11. Dispositif (1) selon la revendication 10, **caractérisé en ce que** l'unité d'émission et/ou de réception (16) peut être repliée au moins partiellement dans la pointe d'insertion (12a).
